# EUROPEAN PATENT APPLICATION

(11) **EP 3 239 483 A1**
(43) Date of publication of application: **01.11.2017**
(21) Application number: 15873299.0
(22) Date of filing: 25.12.2015
(51) Int. Cl.: F01N 3/04, B01D 50/00, B01D 53/18, B01D 53/92

(54) **EXHAUST GAS PURIFICATION DEVICE-USE SCRUBBER FOR SHIP-USE DIESEL ENGINE USING LOW-GRADE FUEL CONTAINING HIGH-CONCENTRATION OF SULFUR COMPONENT**

(30) Priority: 26.12.2014 JP 2014265076
(71) Applicant: Usui Co., Ltd., Sunto-gun Shizuoka 411-8610 (JP)
(72) Inventor: FURUGEN Munekatsu, Nishinomiya-shi Hyogo 662-0875 (JP); MAKINO Tadashi, Takatsuki-shi Osaka 569-1020 (JP); TAKIKAWA Kazunori, Numazu-shi Shizuoka 410-0037 (JP)
(74) Representative: Hoppe, Lars
(86) International application number: PCT/JP2015/086295
(87) International publication number: WO 2016/104731

(57) **Abstract**

Provided is a scrubber for an exhaust gas purification apparatus of a marine diesel engine using low-quality fuel such as fuel oil containing high-concentration sulfur components, the scrubber capable of inhibiting PM in exhaust gas of the marine diesel engine from being mixed into scrubber treatment water and also sufficiently adapting to a swing or tilt of a ship body. The scrubber is of a wetted-wall type to cause treatment water (treatment liquid) to fall down in a film shape along an inner wall surface of a vertical tube and cause the exhaust gas to flow in the vertical tube for reaction, has a structure in which a plurality of cylindrical tubes are vertically disposed in a barrel tube and these cylindrical tubes are cooled by cooling water, and has a structure in which the treatment water is caused to fall down along the inner wall surface of each tube from above the cylindrical tube to undergo a reaction with the exhaust gas introduced from below the cylindrical tube. Even if the ship body swings or is tilted, the film thickness of a water film falling down over the inner wall surface of the cylindrical tube is kept approximately uniform, droplets by a fierce collision between the exhaust gas and the treatment water do not occur. Furthermore, a film shortage does not occur in the water film, and it does not occur that the exhaust gas becomes in a state of non-contact with the treatment water.

## Description

### Technical Field

The present invention relates to exhaust gas treatment technology for a large-displacement marine diesel engine using low-quality fuel such as fuel oil particularly containing high-concentration of sulfur components for marine, electric power generation, industries, and so forth, the fuel oil being represented as Diesel Oil (DO), Marine Diesel Fuel (MDF) or Marine Diesel Oil (MDO), Marine Fuel Oil (MFO), Heavy Fuel Oil (HFO), and Residual Fuel Oil (RFO) in ship industries and these representations hereinafter collectively referred to as fuel oil in the present invention, in order to remove harmful gas, such as sulfur oxides, contained in exhaust gas of the marine diesel engine for purification. In more detail, the present invention relates to a scrubber utilizing a difference in diffusion speed between gas and particles, the scrubber being disposed in a large-displacement marine diesel engine which discharges high-temperature exhaust gas.

### Background Art

As a motive power source for various marines, electric power generators, large construction machines and, furthermore, various automobiles, and so forth, diesel engines have been widely adopted. Particulate matter (hereinafter referred to as "PM") mainly including carbon, sulfur oxides (hereinafter referred to as "SOx"), and nitrogen oxides (hereinafter referred to as "NOx") contained in exhaust gas discharged from this diesel engine not only cause air pollution as well known but also are substances extremely hazardous to human bodies. Therefore, purification of the exhaust gas is extremely important. Thus, many suggestions have already been made, such as an improvement of a diesel engine combustion scheme, adoption of various exhaust gas filters, an exhaust gas recirculation (hereinafter referred to as "EGR") method, a selective catalytic reduction (hereinafter referred to as "SCR") process, and an electrical treatment method by using corona discharge, and some of such suggestions have been partially put to practical use.

Here, PM (particulate matter) components in exhaust gas of a diesel engine is classified into two, that is, soluble organic fractions (hereinafter referred to as "SOF") and insoluble organic fractions (hereinafter referred to as "ISF"). Of these, the SOF components have unburned ones of fuel and lubricant oil as main components, including harmful substances such as carcinogenetic polycyclic aromatics. On the other hand, the ISF components have low-electrical-resistivity carbon (soot) and sulfate components as main components. Due to influences of these SOF components and ISF components on human bodies and environments, exhaust gas is desired to be reduced as much as possible. In particular, it is also said that the degree of adverse effects of PM on living bodies is particularly problematic when the particle diameter is of a nanometer size.

As the electrical treatment method by using corona discharge, for example, a method and apparatus described below (Patent Literatures 1 and 2) have been suggested.

That is, in Patent Literature 1, as schematically described in Figure 9, the Applicant has suggested an electrical treatment method and apparatus for exhaust gas of a diesel engine, wherein an exhaust gas passage 121 is provided with a discharging/charging unit 122 formed of a corona discharging unit 122-1 and a charging unit 122-2 to charge PM 128 in exhaust gas G1 having carbon as a main component with corona-discharged electrons 129, and the charged PM 128 is collected by a collection plate 123 disposed in the exhaust gas passage 121, the method and apparatus having a configuration such that an electrode needle 124 in the discharging/charging unit 122 has a short length in a flowing direction of an exhaust gas flow and the collection plate 123 is disposed in a direction perpendicular to the flowing direction of the exhaust gas flow. Note in the drawing that 125 denotes a seal gas pipe, 126 denotes a high-voltage power supply device, and 127 denotes an exhaust gas induction pipe.

However, in the exhaust gas treatment technology for a diesel engine which electrically treats PM in exhaust gas by using corona discharge or the like described above, the following problems arise. That is, in marine diesel engines, for example, when the exhaust gas purification apparatus described above in Patent Literature 1 is used for a large-displacement marine diesel engine which has a significantly large displacement compared with automobile diesel engines using diesel fuel with less content of sulfur components and uses low-quality fuel equivalent to or lower than fuel oil containing high-concentration sulfur components (fuel oil contains sulfur components 100 to 3500 times as much as diesel fuel: according to JIS K 2204:2007 "Diesel Fuel"; 0.0010 percent by mass or lower, K 2205-1990 "Fuel Oil"; 0.5 percent by mass to 3.5 percent by mass or lower), it is required to overcome a problem in which the sulfur components in the low-quality fuel equivalent to or lower than fuel oil are not only contained as SOF in exhaust gas and/or EGR gas but become sulfate, thereby corroding engine components, in particular, exhaust-related components.

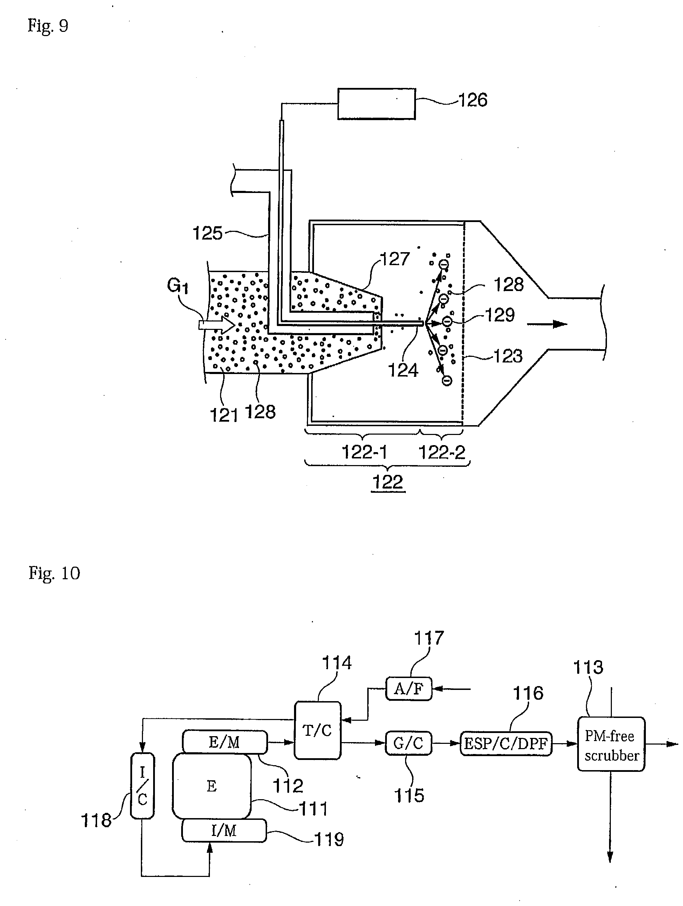

As measures against this problem, the Applicant has suggested an exhaust gas purification apparatus for a marine diesel engine described in Patent Literature 2. This exhaust gas purification apparatus for the marine diesel engine is, as schematically described in Figure 10 thereof, configured to have an exhaust gas cooler (G/C) 115 disposed downstream of a turbine (not depicted) of a turbocharger (T/C) 114 of an exhaust pipe downstream of an exhaust manifold (E/M) 112 of a diesel engine (E) 111 using low-quality fuel such as fuel oil containing high-concentration sulfur components as fuel, an electrostatic cyclone exhaust gas purification apparatus [ES/C/DPF (Diesel Particulate Filter)] 116 further disposed downstream of the exhaust gas cooler (G/C) 115, and a scrubber (hereinafter referred to as a "PM-free scrubber") 113 which dissolves SOx in the exhaust gas into its treatment water but hardly dissolves or removes PM into or from treatment water disposed to a downstream-side piping to cause outside air to be taken to an intake pipe downstream of an air filter (A/F) 117 via a compressor (not depicted) of the turbocharger (T/C) 114 and an intercooler (I/C) 118 to an intake manifold (I/M) 119 of the engine.

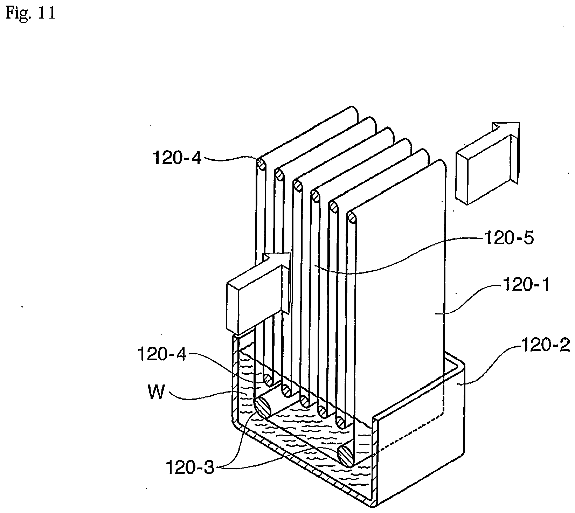

As this PM-free scrubber 113 in the exhaust gas purification apparatus for the marine diesel engine, as one example depicted in Figure 11, the following has been known, which is configured, in a scrubber housing (not depicted) provided in an exhaust gas or EGR gas passage, to have a fibrous, water-absorptive endless belt 120-1 disposed in a serpentine shape (meandering shape) between a drive roll 120-3 provided at a lower portion and driven rolls 120-4 provided at both upper and lower portions in a treatment water tank 120-2, causing the entire surface of each front and back of the endless belt to be always wet by a piping (not depicted) and a circulation pump (not depicted) driven by a motor (not depicted) causing treatment water W in the treatment water tank 120-2 to fall down via a supply nozzle (not depicted) from directly below the driven rolls 120-4 provided above both front and back surfaces of the endless belt 120-1. In the drawing, 120-5 denotes an exhaust gas flow channel.

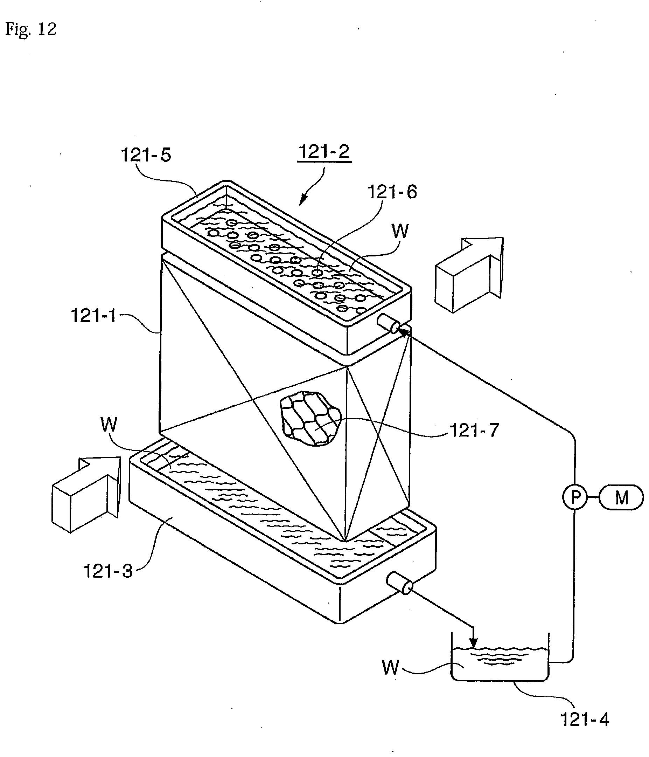

Also, in another example depicted in Figure 12, a configuration is such that honeycomb cores (for example, product name: Honeycomb Washer manufactured by Nichias Corporation) in a honeycomb structure are multilayered and provided as a honeycomb unit core part 121-1, the honeycomb structure in which wave plates and flat plates made of preferably a porous ceramic-made material with glass fiber, carbon fiber, aramid fiber, or the like taken as a skeleton are alternately multilayered, with exhaust gas flow channels 121-7 having tunnel-shaped micro sections between the flat plates and the wave plates; a water supply unit 121-2 formed of a water supply nozzle or a water supply duct to substantially uniformly supply water to the honeycomb unit core part is arranged; and scrubber treatment water (wash water) W supplied from the water supply unit 121-2 falls down while wetting the surface of each of tilted micro flow channel of the honeycomb unit core part 121-1 to reach an under tray 121-3 and is then sent by a pump P from a treatment water tank 121-4 to the water supply unit 121-2 for circulated use. In the drawing, 121-5 denotes a treatment water tank, and 121-6 is a nozzle hole.

### Citation List

### Patent Literature

PTL 1: WO 2006/064805
PTL 2: Japanese Patent Application Laid-Open No. 2014-224527

### Summary of Invention

### Technical Problem

However, the PM-free scrubber in the diesel engine exhaust gas purification apparatus described in Patent Literature 2 described above and so forth has problems described below.

That is, in the PM-free scrubber depicted in Figure 11, by a thin-film layer of treatment water W present (partially falling down) on each belt-like wall surface configuring the scrubber, SOx in the exhaust gas is absorbed in the treatment water while flowing along a portion near the surface of the treatment water of each wall surface of the exhaust gas flow channel 120-5, dissolved, and discharged, with its concentration drastically reduced. PM in the exhaust gas merely flows along the surface of the treatment water, and the exhaust gas hardly collides with the surface of the scrubber treatment water fiercely and merely smoothly flows partially in contact with and along the portion near the surface of the PM-free scrubber treatment water. Thus, mutual mixture does not occur. However, since the endless belt 120-1 is disposed in a serpentine shape between the drive roll 120-3 provided at the lower portion and the driven rolls 120-4 provided at both upper and lower portions as spaced in the treatment water tank 120-2, the endless belt 120-1 wound between the upper and lower rolls as spaced flaps with the swing of a ship body when the ship body swings by front-and-back swing (surging), left-and-right swing (swaying), up-and-down swing (heaving), bow swing (yawing), lateral swing (rolling), or vertical swing (pitching) due to stormy weather in the ocean or the like, thereby causing droplets to occur on a portion near the surface of the endless belt 120-1. There is a concern that these droplets may induce a collision between the exhaust gas and the treatment water to invite a contact of the PM particles with the treatment water.

Also, in the case of the PM-free scrubber using the honeycomb washer depicted in Figure 12, the exhaust gas hardly crosses or collides fiercely with the surface of the water thin film layer of the treatment water at a nearly perpendicular angle, and mutual mixture does not occur. Thus, SOx in the exhaust gas is reliably removed in the exhaust gas flow channel 121-7, and PM as particles is discharged in a state of being mostly left and contained. However, this PM-free scrubber has a drawback in which the range scope of the water stream amount of the scrubber treatment water is not much large and it is impossible to easily adapt the water stream amount by significantly increasing or decreasing the water stream amount of the scrubber treatment water in accordance with an increase of the flow amount of the exhaust gas (an increase in load on the marine diesel engine and a rise in rotation speed), an increase in sulfur content of burning oil, sailing to a highly-regulated sea area in a sailing sea area, and so forth.

Note that scrubbers include various types such as, as those of the pressurized water type, a jet scrubber, a venturi scrubber, a cyclone scrubber, a spray tower, and so forth and, as those of packed bed type, a packed tower, and a fluidized bed scrubber, and so forth. In any of these scrubbers, the exhaust gas flow fiercely makes contact with the surface of the treatment water in a mutually crossing manner. Thus, mixing of an organic solvent soluble portion in the exhaust gas, that is, an oily mixture having an n-hexane extract derived from fuel or lubricating oil as a main component, into the treatment water is not avoidable. For a process of draining this, an enormous number of processes and a large-scale apparatus (including a storage facility for preventing oil-containing waste treatment water from being discharged to an ocean) are required.

On the other hand, there is a liquid-dispersal-type absorbing apparatus which disperses liquid in a form of a liquid film into a vapor phase. As a typical example of this, a wetted-wall-type absorption reaction apparatus has been known in which a treatment liquid is caused to fall down in a film shape over an inner wall surface of a cylindrical tube vertically disposed and reactant gas is introduced from below the cylindrical tube for reaction. However, this wetted-wall-type absorption reaction apparatus has the following drawbacks. Since this apparatus is a facility apparatus installed and fixed to the ground and is not for marine use, considerations are not given at all to a swing and tilt of the ship body. When the ship body swings or is tilted, the cylindrical tube swings or is tilted in synchronization with the ship body, and a large difference occurs between a cylindrical tube positioned at an upper portion of the tilt and a cylindrical tube positioned at a lower portion thereof in the flow amount of the treatment liquid flowing into the cylindrical tube, thereby making the film thickness of the water film falling down over the inner wall surface nonuniform. In extreme cases, the liquid fiercely flows in to cause droplets, arousing concerns that the exhaust gas and the treatment liquid may collide. Alternatively, a film shortage (treatment liquid shortage) occurs to cause the inner wall surface of the cylindrical tube to be exposed to make the exhaust gas and the treatment liquid in a noncontact state, arousing concerns that discharge may be made without reduction of the content of harmful substances.

In view of the problems of the conventional technology described above, the present invention is to provide a scrubber used for an exhaust gas purification apparatus for a marine diesel engine using low-quality fuel such as fuel oil containing high-concentration sulfur components. The scrubber can purify exhaust gas by removing SOx with high efficiency while inhibiting PM in the exhaust gas from a large-displacement marine diesel engine from being mixed into treatment water, the engine using low-quality fuel such as fuel oil particularly containing high-concentration sulfur components and discharging high-speed and/or large-flow-amount exhaust gas, and can also inhibit PM from being mixed into scrubber treatment water. Not only that, the scrubber can sufficiently adapt to a sway and tilt of a ship body due to stormy weather in the ocean or the like, can avoid a collision between the treatment water and the exhaust gas, and can prevent a contact and mixing between PM particles and the treatment water. Furthermore, the scrubber can easily adapt to the flow amount of the exhaust gas (load on the marine diesel engine), the sulfur content of burning oil, regulation values in a sailing sea area, and so forth.

### Solution to Problems

A scrubber for an exhaust gas purification apparatus for a marine diesel engine using low-quality fuel containing high-concentration sulfur components according to the present invention basically adopts a wetted-wall type (gas-liquid contact type) in which treatment water (treatment liquid) is caused to fall down in a film shape along an inner wall surface of a tube body vertically disposed and exhaust gas is introduced into from below the tube body into the tube body for absorption reaction. The gist of the present invention is that the wetted-wall-type scrubber is disposed to an exhaust pipe or an EGR piping connected to an exhaust manifold of the engine to cause treatment water to fall down in a film shape along an inner wall surface of a vertical tube and cause exhaust gas to flow in the vertical tube for reaction, wherein a plurality of cylindrical tubes (wetted-wall falling tubes) are vertically disposed as spaced between an upper tube plate and a lower tube plate that are respectively provided at both upper and lower ends of a barrel tube having a cooling water inflow tube and a cooling water outflow tube near the upper and lower ends, respectively; the barrel tube is provided with an upper chamber having a treatment water inflow tube above the upper tube plate and a lower chamber having a treatment water outflow tube below the lower tube plate; an upper guide pipe plate is provided above the upper chamber, the upper guide pipe plate having a treatment water guide pipe disposed as positioned so as to correspond to each cylindrical tube, the treatment water guide pipe having an outer diameter smaller than an inner diameter of the cylindrical tube and retaining a desired space between a lower-end opening end and an inner surface of the cylindrical tube; a lower guide pipe plate is provided below the lower chamber, the lower guide pipe plate having a gas guide pipe disposed as positioned so as to correspond to each cylindrical tube, the gas guide pipe having an outer diameter smaller than the inner diameter of the cylindrical tube and having an upper-end opening end retaining a desired space with respect to the inner surface of the cylindrical tube; an upper cover is provided above the upper guide pipe plate and a lower cover is provided below the lower guide pipe plate; and the treatment water supplied via the treatment water guide pipe is caused to fall down in a film shape along the inner wall surface of the cylindrical tube to undergo a reaction with the exhaust gas introduced from the gas guide pipe into the cylindrical tube.

Also, as a preferred mode, the treatment water guide pipe in the present invention has the lower-end opening end whose diameter is expanded in a trumpet shape. Furthermore, as a preferred mode, the gas guide pipe has the upper-end opening end whose diameter is reduced in a tapered shape (nozzle shape).

Furthermore, in the present invention, as preferred modes, in order to cause a vortex in a flow of the exhaust gas in the cylindrical tube (wetted-wall falling tube), the scrubber is configured to have a turbulator provided to an axial center portion of the cylindrical tube, the turbulator having protruding portions in a radial direction spaced as desired in an axial direction, or, in order to cause a vortex in a flow of the exhaust gas in the cylindrical tube and cause dispersion of the treatment water to a circumferential direction of an inner circumferential surface of the cylindrical tube and an increase of a residence time and a contact surface of the treatment water on the inner circumferential surface of the cylindrical tube, the scrubber is configured to have a turbulent flow promoting member or a turbulent flow control member disposed in a spiral shape so as to be along an inner circumferential surface of the cylindrical tube.

Also in the present invention, as a preferred mode, the scrubber comprises a partition structure having an upper end of the cylindrical tube (wetted-wall falling tube) protruding from the upper tube plate and having, between protruding portions, at tips thereof, a groove whose groove bottom is positioned at a position higher than a tip height of the cylindrical tube and/or conduction hole in a wall part or a groove at a lower end of the wall part, the partition structure having a height higher than a height of the protruding portions.

Furthermore, as a preferred mode, the partition structure of the present invention includes a weir provided in an outer cylinder concentric to the upper chamber and having the groove and/or the through hole between the outer cylinder and the upper chamber.

Still further, as a preferred mode, the present invention is directed to a multistage structure or a multilayered structure with a plurality of said scrubbers for the exhaust gas purification apparatus arranged in series in a vertical direction, the structure configured by interposing an adaptor between the lower guide pipe plate of one of the scrubber for the exhaust gas purification apparatus arranged above and the upper guide pipe plate of another of the scrubber for the exhaust gas purification apparatus arranged below, the adaptor having an inner diameter equal to an inner diameter of the upper or lower chamber and having adaptor flanges above and below.

### Advantageous Effects of Invention

The scrubber for the exhaust gas purification apparatus for the marine diesel engine using low-quality fuel containing high-concentration sulfur components according to the present invention has effects described below. (1): The scrubber has excellent effects as follows. In the wetted-wall type, the treatment water (treatment liquid) is caused to fall down in a film shape over the inner wall surface of the cylindrical tube vertically arranged, the film thickness of the falling water film is kept uniform, a film shortage does not occur, and the exhaust gas is introduced from below the cylindrical tube into the cylindrical tube to undergo an absorption reaction without a fierce collision between the exhaust gas and the treatment water. It is possible to effectively inhibit PM from being mixed into the scrubber treatment water. Not only that, as consideration to a swing or tilt of the ship body, when the ship body sways or is tilted, the film thickness of the water film falling down over the inner wall surface of the cylindrical tube is kept uniform even if a difference occurs in the flow amount of the treatment water flowing in the cylindrical tube (wetted-wall falling tube). Also, droplets by a fierce collision between the exhaust gas and the treatment water do not occur. Furthermore, a film shortage does not occur in the water film. Thus, it never occurs that the inner wall surface of the cylindrical tube is exposed to cause the exhaust gas to become in a state of non-contact with the treatment liquid. Thus configured, the scrubber can sufficiently adapt also to a swing or tilt of the ship body due to stormy weather in the ocean or the like. Also, compared with a PM-free scrubber using a honeycomb washer, the range scope of the water amount of the treatment water can be significantly increased. Thus, it is possible to easily adapt by increasing or decreasing the water amount in accordance with an increase in the flow amount of the exhaust gas (an increase in load on the marine diesel engine and a rise in rotation speed), an increase in sulfur content of burning oil, sailing to a highly-regulated sea area in a sailing sea area, and so forth.
(2): A turbulator having protruding portions in a radial direction spaced as desired in an axial direction is provided to the axial center portion of the cylindrical tube to cause a vortex in the flow of the exhaust gas in the cylindrical tube, or a turbulent flow control member, which is a linear member having a triangular section is disposed in a spiral shape so as to be along the inner circumferential surface of the cylindrical tube to cause a vortex in the flow of the exhaust gas and cause dispersion of the treatment water to the circumferential direction of the inner circumferential surface of the cylindrical tube and an increase of a residence time and a contact surface of the treatment water on the inner circumferential surface of the cylindrical tube. With this, the effects described in (1) above can be more enhanced.
(3): A partition structure is disposed having an upper end of the cylindrical tube protruding from the upper tube plate and having, between protruding portions, at tips thereof, grooves whose groove bottom is positioned at a position higher than a tip height of the cylindrical tube and/or a conduction hole in a wall part or a groove at a lower end of the wall part, the partition structure having a height higher than a height of the protrusion. With this, when the ship body swings by front-and-back swing (surging), left-and-right swing (swaying), bow swing (yawing), lateral swing (rolling), or vertical swing (pitching) due to stormy weather in the ocean or the like to cause a tilt and undulations on the surface of the treatment water in the upper chamber, with the presence of the partition structure, unevenness of the water amount of the treatment water flowing into each partition can be prevented from increasing and can be decreased. Therefore, unevenness of the water amount of the treatment water flowing in the cylindrical tube (wetted-wall falling tube) is also decreased. Even if some difference occurs depending on the cylindrical tube, the film thickness of the water film falling down over the inner wall surface of the cylindrical tube can be kept uniform. Also, droplets by a fierce collision between the exhaust gas and the treatment water do not occur. Furthermore, a film shortage does not occur in the water film. Thus, it does not occur that the inner wall surface of the cylindrical tube is exposed to cause the exhaust gas to become in a state of non-contact with the treatment water. With sufficient adaptation to a swing or tilt of the ship body due to stormy weather in the ocean or the like, the treatment water falls down along the inner surface of the cylindrical tube as a water film. Thus, the effects described in (1) above can be stably exerted.
(4): A plurality of said scrubbers for the exhaust gas purification apparatus of the present invention are arranged in series in a vertical direction, and an adaptor is disposed between the lower guide pipe plate of a scrubber for the exhaust gas purification apparatus arranged above and the upper guide pipe plate of a scrubber for the exhaust gas purification apparatus arranged below, the adaptor having an inner diameter substantially equal to an inner diameter of each upper or lower chamber and having adaptor flanges above and below. With this, multistaged or multilayered serial arrangement can be made, and SOx is dissolved more into its treatment water to allow a further improvement of a rate of removal of SOx from the exhaust gas.

### Brief Description of Drawings

Figure 1 is an enlarged longitudinal section view of main parts depicting a first embodiment of a scrubber for an exhaust gas purification apparatus for a marine diesel engine according to the present invention.
Figure 2 is an enlarged longitudinal section view of main parts depicting a second embodiment of the scrubber for the exhaust gas purification apparatus for the marine diesel engine according to the present invention as above.
Figure 3 is a perspective view of the first and second embodiments of the scrubber for the exhaust gas purification apparatus for the marine diesel engine according to the present invention as above, including a piping situation.
Figure 4 is a perspective view of a third embodiment of the scrubber for an exhaust gas purification apparatus for the marine diesel engine of according to the present invention as above, including a piping situation.
Figure 5 is an enlarged longitudinal section view of main parts depicting a fourth embodiment of the scrubber for the exhaust gas purification apparatus for the marine diesel engine according to the present invention as above, Figure 5(a) being a section view of a cylindrical tube and Figure 5 (b) being a plan view of the cylindrical tube.
Figure 6 is an enlarged longitudinal section view of main parts depicting a fifth embodiment of the scrubber for the exhaust gas purification apparatus for the marine diesel engine according to the present invention as above, Figure 6(a) being a section view of a cylindrical tube and Figure 6(b) being a plan view of the cylindrical tube.
Figure 7 is an enlarged longitudinal section view of main parts depicting a sixth embodiment of the scrubber for the exhaust gas purification apparatus for the marine diesel engine according to the present invention as above.
Figure 8 is an enlarged view of the main parts of the scrubber for the exhaust gas purification apparatus for the marine diesel engine of the sixth embodiment depicted in Figure 7, Figure 8(a) being a plan view depicting part of an upper portion of a partition structure and Figure 8(b) being a cross-sectional plan view depicting part of a lower portion of the partition structure.
Figure 9 is a schematic view depicting an example of a conventional exhaust gas purification apparatus for a marine diesel engine.
Figure 10 is a block diagram depicting an example of the conventional exhaust gas purification apparatus for the marine diesel engine.
Figure 11 is a perspective view depicting an example of a PM-free scrubber in the exhaust gas purification apparatus for the marine diesel engine depicted in Figure 10.
Figure 12 is a perspective view depicting another example of the PM-free scrubber in the exhaust gas purification apparatus for the marine diesel engine depicted in Figure 10.

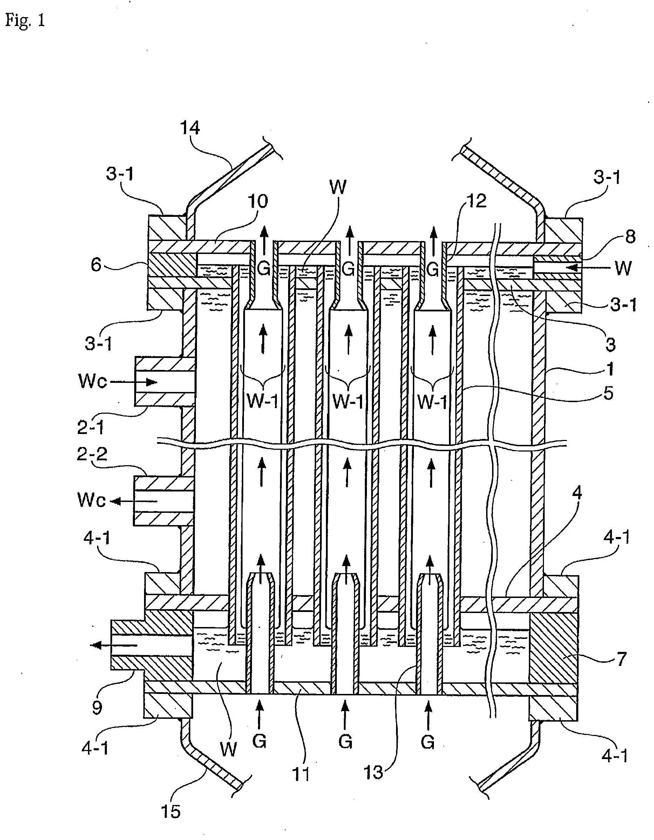

A scrubber for an exhaust gas purification apparatus for a marine diesel engine depicted in Figure 1 as a first embodiment is a wetted-wall multitubular-type scrubber in which an absorption reaction is caused between treatment water (treatment liquid) and exhaust gas in a plurality of cylindrical tubes disposed in a barrel tube (external wall tube), and the structure of the scrubber is configured of the barrel tube 1 configuring a scrubber main body, a cooling water inflow tube 2-1, a cooling water outflow tube 2-2, an upper tube plate 3, a lower tube plate 4, cylindrical tubes 5, an upper chamber 6, a lower chamber 7, a treatment water inflow tube 8, a treatment water outflow tube 9, an upper guide pipe plate 10, a lower guide pipe plate 11, treatment water guide pipes 12, gas guide pipes 13, an upper cover 14, and a lower cover 15. W denotes treatment water, W-1 denotes a water film, Wc denotes cooling water, and G denotes exhaust gas.

More particularly, an upper flange 3-1 and a lower flange 4-1 are provided to protrude at upper and lower ends of the barrel tube 1, the cooling water inflow tube 2-1 and the cooling water outflow tube 2-2 being respectively provided near the upper and lower ends, and the upper flange 3-1 is provided with the upper tube plate (tube sheet) 3 and the lower flange 4-1 is provided with the lower tube plate (tube sheet) 4. Between the upper tube plate 3 and lower tube plate 4, the cylindrical tubes 5 which cause the treatment water W to fall down in a film shape along inner wall surfaces of the cylindrical tubes are vertically arranged, and the p cylindrical tubes are disposed with a desired space retained therebetween. In this regard, each cylindrical tube 5 is vertically disposed so that its upper and lower ends protrude outward from the upper tube plate 3 and the lower tube plate 4, respectively. Furthermore, at a position above the upper tube plate 3, the upper guide pipe plate 10 is attached to the upper flange 3-1 via the upper chamber 6, with a desired space retained with respect to the upper tube plate 3 in a vertical direction. The upper chamber 6 is provided with the treatment water inflow tube 8 to let the treatment water flow in between the upper tube plate 3 and the upper chamber 6. To the upper guide pipe plate 10, the treatment water guide pipes 12 are disposed and fixed so as to be positioned to correspond to the respective cylindrical tubes, the treatment water guide pipes 12 each having an outer diameter smaller than an inner diameter of the cylindrical tube 5 and having a lower end with a length inserted into the cylindrical tube 5 and, preferably, having a lower-end opening end with a diameter expanded in a trumpet shape so as to retain a desired space (corresponding to a film thickness of a water film falling down over the inner wall surface of the cylindrical tube 5) with respect to the inner surface of the cylindrical tube 5. The structure is such that the treatment water W flowing in between the upper tube plate 3 and the upper chamber 6 flows into the cylindrical tubes 5 preferably via each of the treatment water guide pipes 12 and falls down along the tube inner surface as the water film W-1. Also, at a position below the lower tube plate 4, the lower guide pipe plate 11 is attached to the lower flange 4-1 via the lower chamber 7, with a desired space retained with respect to the lower tube plate 4 in a vertical direction. The treatment water outflow tube 9 which causes the treatment water accumulated between the lower tube plate 4 and the lower chamber 7 to flow out is attached to the lower chamber 7. To the lower guide pipe plate 11, the gas guide pipes 13 are disposed and fixed so as to be positioned to correspond to the respective cylindrical tubes 5, the gas guide pipes 13 each having an outer diameter smaller than the inner diameter of the cylindrical tube 5 and having an upper end with a length inserted into the cylindrical tube 5 and, preferably, having an upper-end opening end with a diameter reduced preferably in a tapered shape (nozzle shape) so as to retain a desired space with respect to the inner surface of the cylindrical tube 5. Above the upper guide pipe plate 10 and the below the lower guide pipe plate 11, the upper cover 14 and the lower cover 15, respectively, are fixedly provided. The structure is such that the exhaust gas G flowing in from a lower cover 15 side flows into each cylindrical tube 5 from the gas guide pipe 13, ascends inside the tube, and flows out to an upper cover 14 side via each treatment water guide pipe 12 attached to the upper guide pipe plate 10.

Note that the lower-end opening of the treatment water guide pipe 12 is formed in a trumpet shape in order to form a water film having a desired thickness on the inner wall surface of the cylindrical tube 5 for falling down, and the upper opening of the gas guide pipe 13 is formed in a tapered shape (nozzle shape) in order to prevent the occurrence of droplets due to a collision between the water film of the treatment water falling down over the inner wall surface of the cylindrical tube 5 and the exhaust gas.

In the above-configured scrubber for the exhaust gas purification apparatus for the marine diesel engine depicted in Figure 1, the treatment water W is supplied between the upper tube plate 3 and the upper guide pipe plate 10 from the treatment water inflow tube 8 connected to the upper chamber 6 provided above the barrel tube 1, and falls down via the treatment water guide pipes 12 along the inner wall surfaces of the cylindrical tubes 5 as the water film W-1. On the other hand, the exhaust gas G flowing into the barrel tube 1 from a lower cover 15 side is introduced into the cylindrical tubes 5 via the gas guide pipes 13 attached to the lower guide pipe plate 11 to ascend inside the cylindrical tubes 5. Here, the water film W-1 flowing down along the inner wall surface of each cylindrical tube 5 and the exhaust gas G ascending inside the cylindrical tube 5 undergo an absorption reaction, and SO₂ in the exhaust gas G is absorbed into the water film W-1. Also, the treatment water flowing down inside the cylindrical tube 5 to be accumulated between the lower tube plate 4 and the lower guide pipe plate 11 is discharged from the treatment water outflow tube 9 provided on the lower chamber 7. On the other hand, the cooling water Wc is supplied into the barrel tube 1 from the cooling water inflow tube 2-1 provided on a side wall of the barrel tube 1, and is caused to flow out from the cooling water outflow tube 2-2 while cooling the group of the cylindrical tubes 5 inside the barrel tube 1. The reason for cooling the group of the cylindrical tubes 5 is to cool each cylindrical tube 5 from its outer surface to keep the temperature of the water film W-1 of the treatment water W at an appropriate temperature, because absorbency and solubility of SOx in the exhaust gas G into the treatment water W decreases with an increase in water temperature of the treatment water W.

In this manner, in the case of the above-configured scrubber for the exhaust gas purification apparatus for the marine diesel engine depicted in Figure 1, the structure is such that the treatment water W falls down inside many cylindrical tubes 5 vertically disposed in the barrel tube 1 as the water film W-1 having the desired film thickness to undergo an absorption reaction with the exhaust gas introduced via the gas guide pipes 13 from below the cylindrical tubes 5 to ascend. Thus, the treatment water W can be accumulated between the upper tube plate 3 and the upper guide pipe plate 10, thereby allowing the range scope of the water stream amount of the supplied treatment water to be significantly increased. Therefore, in this PM-free scrubber, when the ship body swings or a tilt occurs, even if a difference occurs in the flow amount of the treatment water flowing into the cylindrical tube 5, the film thickness of the water film W-1 falling down over the inner wall surface of the cylindrical tube 5 can be kept approximately uniform. Also, droplets by a fierce collision between the exhaust gas G and the treatment water W do not occur. Furthermore, a film shortage does not occur in the water film W-1. Thus, it never occurs that the inner wall surface of the cylindrical tube 5 is exposed to cause the exhaust gas to become in a state of non-contact with the treatment water. Also, it is possible to easily adapt by increasing or decreasing the water amount of the scrubber treatment water in accordance with an increase in the flow amount of the exhaust gas (an increase in load on the marine diesel engine and a rise in rotation speed), an increase in sulfur content of burning oil, sailing to a highly-regulated sea area in a sailing sea area, and so forth.

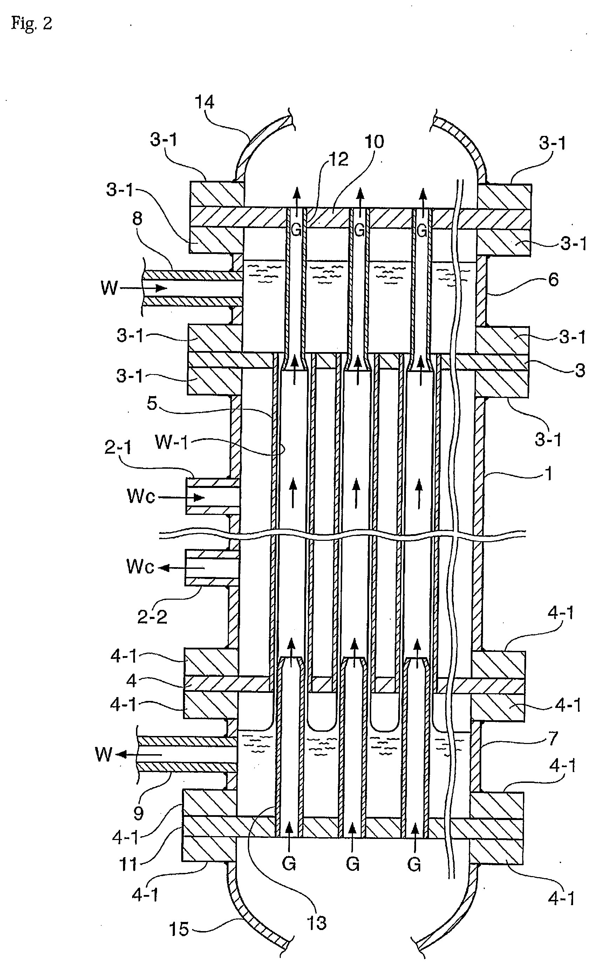

A scrubber for an exhaust gas purification apparatus for a marine diesel engine depicted in Figure 2 as a second embodiment is configured similarly to the scrubber for the exhaust gas purification apparatus for the marine diesel engine of the above-described first embodiment except that a treatment water tank unit between the upper tube plate 3 and the upper guide pipe plate 10 and a treatment water tank unit between the lower tube plate 4 and the lower guide pipe plate 11 are each formed to be large and the treatment water guide pipes 12 and the gas guide pipes 13 are made long.

In the case of the above-configured scrubber for the exhaust gas purification apparatus for the marine diesel engine depicted in Figure 2, the treatment water W is supplied between the upper tube plate 3 and the upper guide pipe plate 10 in the upper chamber 6 from the treatment water inflow tube 8 provided above the barrel tube 1, and falls down via the long treatment water guide pipes 12 along the inner wall surfaces of the cylindrical tubes 5 as the water film W-1. On the other hand, the exhaust gas G flowing into the barrel tube 1 from a lower cover 15 side is introduced into the cylindrical tubes 5 via the long gas guide pipes 13 attached to the lower guide pipe plate 11, and ascends inside the cylindrical tubes 5. Here, the water film W-1 falling down along the inner wall surface of each cylindrical tube 5 and the exhaust gas G ascending inside the cylindrical tube 5 undergo an absorption reaction, and SO₂ in the exhaust gas G is absorbed into the water film W-1. Also, the treatment water falling down inside the cylindrical tubes 5 to be accumulated between the lower tube plate 4 and the lower guide pipe plate 11 is discharged from the treatment water outflow tube 9 attached to the lower chamber 7. On the other hand, the cooling water Wc is supplied into the barrel tube 1 from the cooling water inflow tube 2-1 provided on the side wall of the barrel tube 1, and flows out from the cooling water outflow tube 2-2 while cooling the group of the cylindrical tubes 5 inside the barrel tube 1.

Therefore, also in the case of this scrubber depicted in Figure 2, as with the scrubber depicted in Figure 1 described above, the structure is such that the treatment water W falls down inside many cylindrical tubes 5 vertically disposed in the barrel tube 1 as the water film W-1 having the desired film thickness to undergo an absorption reaction with the exhaust gas introduced via the long gas guide pipes 13 from below the cylindrical tubes 5 to ascend. Thus, the treatment water can be accumulated between the upper tube plate 3 and the upper guide pipe plate 10, thereby allowing a large waterhead pressure of the supplied treatment water to be taken and allowing the range scope of the water stream amount to be significantly increased. Therefore, also in the case of this PM-free scrubber, when the ship body swings or a tilt occurs, even if a difference occurs in the flow amount of the treatment water flowing into the cylindrical tube 5, the film thickness of the water film W-1 falling down over the inner wall surface of the cylindrical tube 5 can be kept approximately uniform. Also, droplets by a fierce collision between the exhaust gas and the treatment water do not occur. Furthermore, a film shortage does not occur in the water film W-1. Thus, it never occurs that the inner wall surface of the cylindrical tube 5 is exposed to cause the exhaust gas to become in a state of non-contact with the treatment water. Also, it is possible to easily adapt by increasing or decreasing the water amount of the scrubber treatment water in accordance with an increase in the flow amount of the exhaust gas (an increase in load on the marine diesel engine and a rise in rotation speed), an increase in sulfur content of burning oil, sailing to a highly-regulated sea area in a sailing sea area, and so forth.

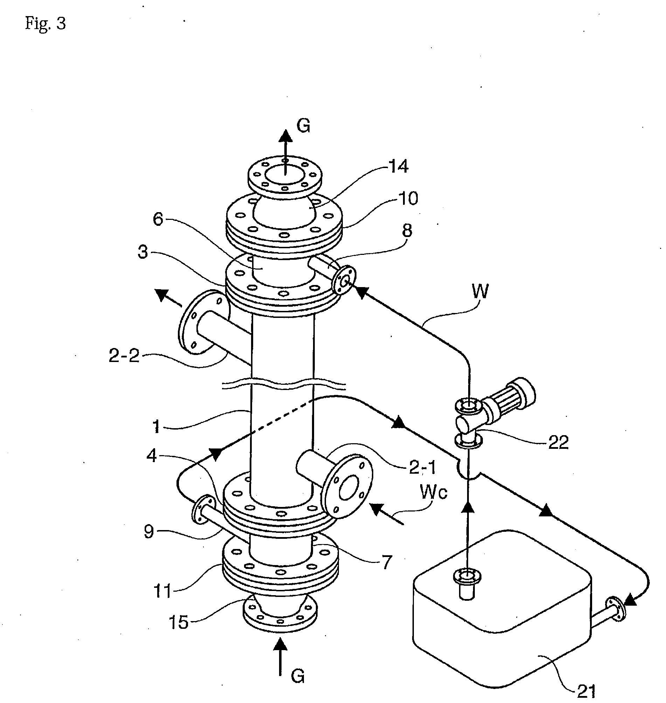

Note that in the scrubbers for the exhaust gas purification apparatus for the marine diesel engine depicted in Figure 1 and Figure 2 described above, as depicted in Figure 3 as a perspective view including a piping situation, piping is configured in a manner such that the treatment water W is pumped by a motor-driven pump 22 from a treatment water tank 21 to be supplied from the treatment water inflow tube 8 of the scrubber to the inside of the upper chamber 6 and, after reaction process inside the cylindrical tubes 5, is discharged from the treatment water outflow tube 9 attached to the lower chamber 7 to return to the treatment water tank 21 again.

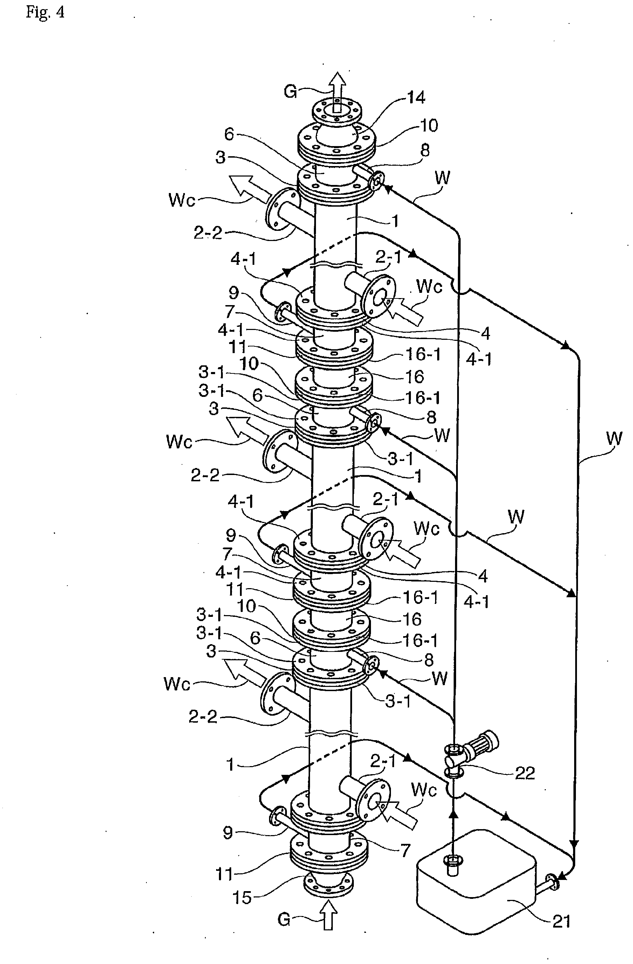

Also, the scrubber for the exhaust gas purification apparatus for the marine diesel engine of the present invention is not restricted to a single structure as depicted in Figure 3 described above, and can have a multistage (multilayered) structure in which a plurality of single-structured scrubbers are arranged as required, for example, via an adaptor in series in a vertical direction. Figure 4 depicts a scrubber for an exhaust gas purification apparatus for a marine diesel engine in this multistage (multilayered) structure as a third embodiment. For example, between the lower guide pipe plate 11 of a scrubber for the exhaust gas purification apparatus arranged above and the upper guide pipe plate 10 of a scrubber for the exhaust gas purification apparatus arranged below, an adaptor 16 is disposed, having an inner diameter approximately equal to an inner diameter of the upper chamber 6 of the scrubber for the exhaust gas purification apparatus arranged below or the lower chamber 7 of the scrubber for the exhaust gas purification apparatus arranged above and having adaptor flanges 16-1 above and below, thereby making a multistage structure possible, with use in series via the adaptor 16. With this multi-staging (multilayering), SOx in the exhaust gas is dissolved more into the scrubber treatment water to allow a further improvement of the rate of removal of SOx from the exhaust gas, and the exhaust gas can be more purified.

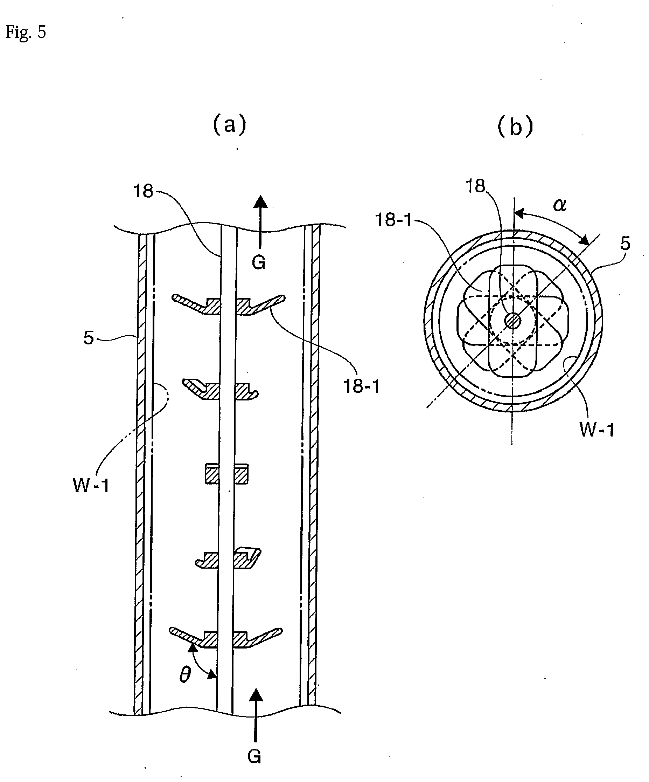

Furthermore, in the scrubber for the exhaust gas purification apparatus for the marine diesel engine of the present invention, in order to promote an absorption reaction between the treatment water W and the exhaust gas G in each cylindrical tube 5, it is possible to provide a turbulator (turbulent flow promoting member or turbulent flow control member) for causing a vortex, preferably a vertical vortex, in the exhaust gas G near an axial core inside the cylindrical tube 5. Figure 5 depicts a scrubber for an exhaust gas purification apparatus for a marine diesel engine including that turbulator as a fourth embodiment. To a shaft 18 provided at the axial center of the cylindrical tube 5, a plurality of turbulators 18-1 each formed of a disc-shaped, cross-shaped, Y-shaped, strap-shaped blade or the like protruding in a radius direction of the shaft can be provided at desired spacings in an axial direction so as to form a right angle or have a tilt or twist with respect to the axial center. Note that, the tilt angle θ of each turbulator 18-1 is, although not particularly restrictive, preferably on the order of 90° to 140°. Also, an arrangement phase angle α of each cross-shaped, Y-shaped, or strap-shaped blade in a circumferential direction is assumed to be defined as appropriate in accordance with the shape of the blade.

With the installation of these turbulators 18-1, the exhaust gas flowing near the axial center of the cylindrical tube 5 and the exhaust gas flowing near the water film of the treatment water can be mutually circulated (exchanged/replaced). With SOx in the exhaust gas dissolved more into the scrubber treatment water, the rate of removal of SOx from the exhaust gas can be further improved, and the exhaust gas can be more purified.

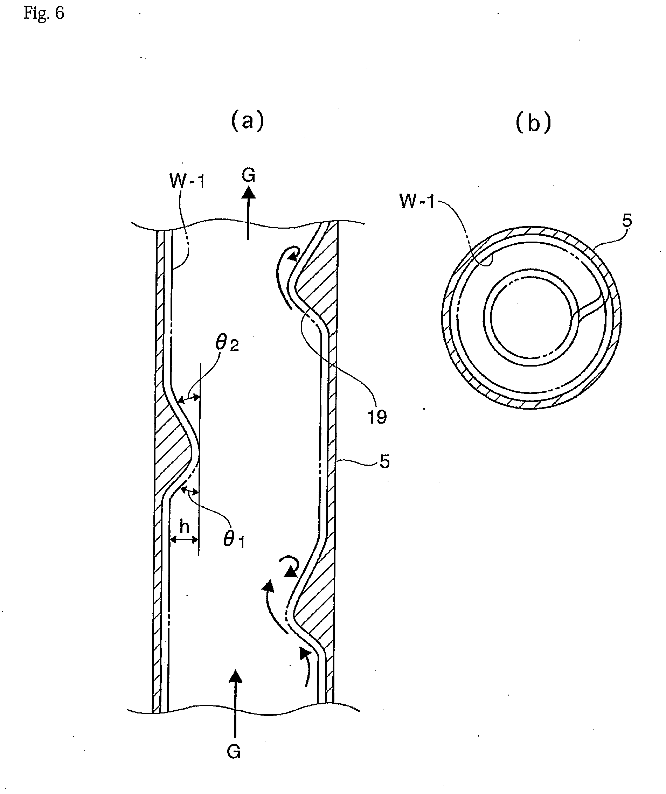

Also, in a scrubber for an exhaust gas purification apparatus for a marine diesel engine depicted in Figure 6 described above as a fifth embodiment, in order to cause a vortex, preferably a vertical vortex, in the flow of the exhaust gas G in the cylindrical tube 5 and cause dispersion and swirl of the treatment water to the circumferential direction of the circular tube 5 and an increase of a residence time and a contact surface area of the treatment water in the cylinder tube 5, for example, a turbulent flow promoting member 19 having a substantially triangular section can be annexed in a spiral shape to the inner circumferential surface of the cylindrical tube 5. Note that this turbulent flow promoting member 19 having a substantially triangular section is formed of a linear member, is integral (integrally molded, brazed, or welded to a mother member) with or separate from the cylindrical tube 5, preferably has a height h in a radial direction on the order of 1/5 to 1/3 of the inner diameter of the cylindrical tube 5, and preferably has a tilt angle θ1 on an exhaust gas inflow side being 15° to 40° and a tilt angle θ2 on an outflow side being 10° to 30°. With the installation of these turbulent flow promoting members 19 having a substantially triangular section, the exhaust gas flowing near the axial center of the cylindrical tube 5 and the exhaust gas flowing near the water film of the treatment water can be mutually circulated (exchanged/replaced). With an increase of the surface area of the treatment water and dispersion and swirl of the treatment water to the spiral direction of the turbulent flow promoting member 19, the residence time on the surface of the cylindrical tube is increased to increase occasions of making contact with the exhaust gas. With SOx in the exhaust gas dissolved more into the scrubber treatment water, the rate of removal of Sox from the exhaust gas can be further improved, and the exhaust gas can be more purified.

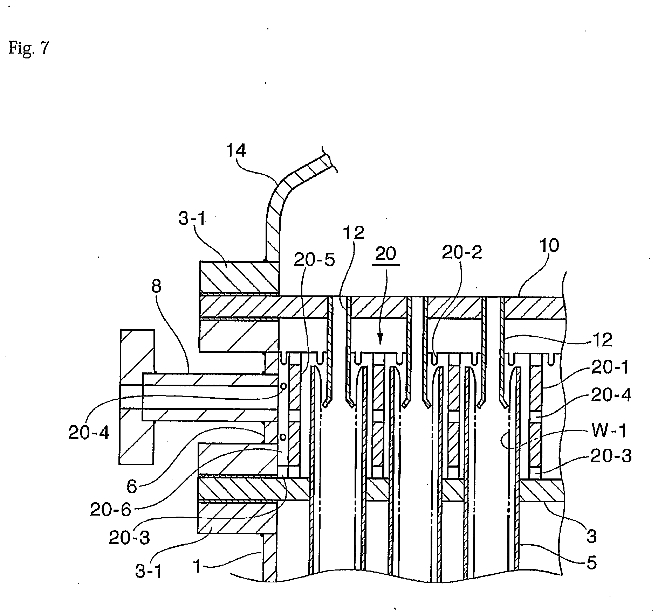

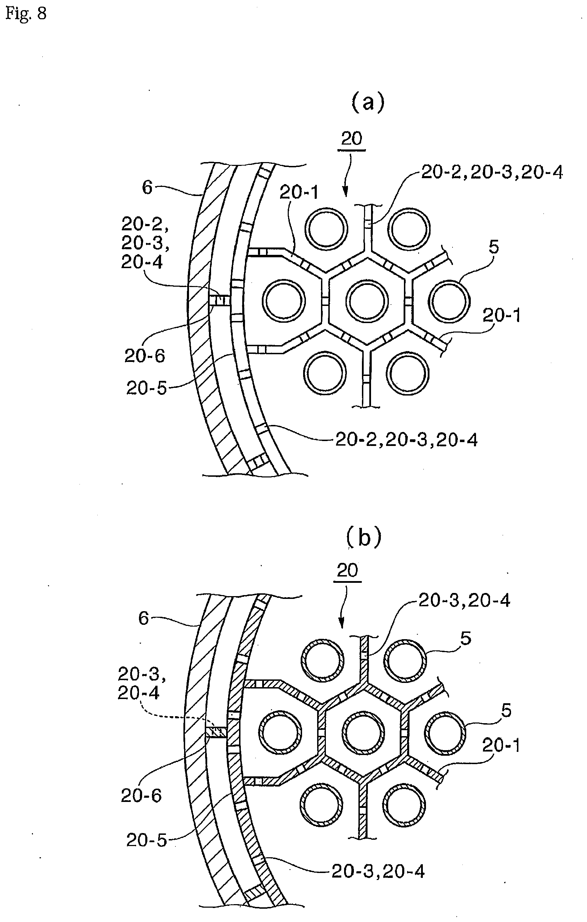

Furthermore, in a scrubber for an exhaust gas purification apparatus for a marine diesel engine depicted in Figure 7 and Figure 8 described above as a sixth embodiment, a partition structure 20 is annexed above the upper tube plate 3 so as to be separate from the inner wall of the upper chamber 6, the partition structure 20 configured to have the upper end of the cylindrical tube 5 protruding from the upper tube plate 3 and have partitions (partition walls) 20-1 disposed in an outer cylinder 20-5 for each cylindrical tube or so as to surround a plurality of cylindrical tubes 5, the partitions 20-1 having, between these protruding portions, at tips thereof, grooves for overflow 20-2 whose groove bottom is positioned at a position higher than a tip height of the cylindrical tube, having conduction grooves 20-3 at a lower end of a wall part and/or through holes 20-4 in the wall part, and having a height higher than the protrusion height of the protruding portions. Also, a weir 20-6 is disposed as spaced, the weir 20-6 having a plurality of through holes 20-4 provided and/or a conduction groove 20-3 provided at a lower end of the wall part between the upper chamber 6 and the outer cylinder 20-5 and having a groove for overflow 20-2 at an upper end of the wall part. In this manner, by providing the partition structure 20 inside the upper chamber 6 via the weir 20-6 equipped with the through holes 20-4, the conduction groove 20-3, and the groove for overflow 20-2, with the presence of the groove for overflow 20-2 of the wall part and the conduction groove 20-3 at the lower end of the wall part of the partition structure 20, the water surface of the treatment water W in each partition 20-1 is retained at a lower position to allow falling and inflow to the cylindrical tubes 5 to be made uniform. Also, even if a swing or tilt of the ship body occurs by front-and-back swing (surging), left-and-right swing (swaying), bow swing (yawing), lateral swing (rolling), vertical swing (pitching), or the like due to stormy weather in the ocean or the like to cause undulations on the surface of the treatment water in the upper chamber, with the presence of the partition structure 20, the treatment water flowing into the partitions gradually flows in from the plurality of through holes 20-4, the condition groove 20-3 at the lower end of the wall part, and the groove for overflow 20-2 at the upper end of the wall part, and an increase in unevenness of the water amount among the partitions 20-1 can be prevented to decrease unevenness. Thus, a head difference of the water surface of the treatment water W in the partition structure 20 is retained to be small, and falling and inflow to the cylindrical tubes 5 can be made uniform. Even if some difference occurs depending on the cylindrical tube 5, the film thickness of the water film falling down over the inner wall surface of each cylindrical tube 5 can be kept uniform. Also, droplets by a fierce collision between the exhaust gas and the treatment water do not occur. Furthermore, a film shortage does not occur in the water film. Thus, it does not occur that the inner wall surface of the cylindrical tube 5 is exposed to cause the exhaust gas to become in a state of non-contact with the treatment water, and the scrubber can be operated more stably.

Note that, as the partition structure 20, when each cylindrical tube is surrounded one by one, a honeycomb structure is generally used as depicted in Figure 8, thereby making it possible to make falling and inflow to the cylindrical tubes 5 uniform. When a plurality of cylindrical tubes 5 are surrounded, the structure can be such that partitions are arranged as squares on a Go board (its drawing is omitted).

### Reference Signs List

- 1: barrel tube
- 2-1: cooling water inflow tube
- 2-2: cooling water outflow tube
- 3: upper tube plate
- 3-1: upper flange
- 4: lower tube plate
- 4-1: lower flange
- 5: cylindrical tube
- 6: upper chamber
- 7: lower chamber
- 8: treatment water inflow tube
- 9: treatment water outflow tube
- 10: upper guide pipe plate
- 11: lower guide pipe plate
- 12: treatment water guide pipe
- 13: gas guide pipe
- 14: upper cover
- 15: lower cover
- 16: adaptor
- 16-1: adaptor flange
- 18: shaft
- 18-1: turbulator
- 19: turbulent flow promoting member
- 20: partition structure
- 20-1: partition
- 20-2: groove
- 20-3: conduction groove
- 20-4: through hole
- 20-5: outer cylinder
- 20-6: weir
- 21: treatment water tank
- 22: motor drive pump
- W: treatment water
- W-1: water film
- Wc: cooling water
- G: exhaust gas
- θ: tilt angle of the turbulator
- θ1: tilt angle on an exhaust gas inflow side
- θ2: tilt angle on an exhaust gas outflow side
- h: height of the turbulent flow promoting member having a triangular section in a radial direction

## Claims

1. A scrubber for an exhaust gas purification apparatus for a marine diesel engine using low-quality fuel such as fuel oil containing high-concentration sulfur components, the scrubber being a wetted-wall-type scrubber disposed to an exhaust pipe or an EGR piping connected to an exhaust manifold of the engine to cause treatment water to fall down in a film shape along an inner wall surface of a vertical tube and cause exhaust gas to flow in the vertical tube for reaction,
wherein a plurality of cylindrical tubes (wetted wall falling tubes) are vertically spaced between an upper tube plate and a lower tube plate that are respectively provided at upper and lower ends of a barrel tube having a cooling water inflow tube and a cooling water outflow tube near the upper and lower ends of the barrel tube, respectively; the barrel tube is provided with an upper chamber having a treatment water inflow tube above the upper tube plate and a lower chamber having a treatment water outflow tube below the lower tube plate; an upper guide pipe plate is provided above the upper chamber, the upper guide pipe plate having a treatment water guide pipe disposed as positioned so as to correspond to each cylindrical tube, the treatment water guide pipe having an outer diameter smaller than an inner diameter of the cylindrical tube and retaining a desired space between a lower-end opening end and an inner surface of the cylindrical tube; a lower guide pipe plate is provided below the lower chamber, the lower guide pipe plate having a gas guide pipe disposed as positioned so as to correspond to each cylindrical tube, the gas guide pipe having an outer diameter smaller than the inner diameter of the cylindrical tube and having an upper-end opening end retaining a desired space with respect to the inner surface of the cylindrical tube; an upper cover is provided above the upper guide pipe plate and a lower cover is provided below the lower guide pipe plate; and the treatment water supplied via the treatment water guide pipe is caused to fall down in a film shape along the inner wall surface of the cylindrical tube to undergo a reaction with the exhaust gas introduced from the gas guide pipe into the cylindrical tube.

2. The scrubber for an exhaust gas purification apparatus for the marine diesel engine using the low-quality fuel such as fuel oil containing high-concentration sulfur components according to claim 1, wherein the treatment water guide pipe has the lower-end opening end whose diameter is expanded in a trumpet shape.

3. The scrubber for an exhaust gas purification apparatus for the marine diesel engine using the low-quality fuel such as fuel oil containing high-concentration sulfur components according to claim 1 or 2, wherein the gas guide pipe has the upper-end opening end whose diameter is reduced in a tapered shape.

4. The scrubber for an exhaust gas purification apparatus for the marine diesel engine using the low-quality fuel such as fuel oil containing high-concentration sulfur components according to any one of claims 1 to 3, wherein, in order to cause a vortex in a flow of the exhaust gas in the cylindrical tube, a turbulator is provided to an axial center portion of the cylindrical tube, the turbulator having protruding portions in a radial direction spaced as desired in an axial direction.

5. The scrubber for an exhaust gas purification apparatus for the marine diesel engine using the low-quality fuel such as fuel oil containing high-concentration sulfur components according to any one of claims 1 to 4, wherein, in order to cause a vortex in a flow of the exhaust gas in the cylindrical tube and cause dispersion of the treatment water to a circumferential direction of an inner circumferential surface of the cylindrical tube and an increase of a residence time and a contact surface of the treatment water on the inner circumferential surface of the cylindrical tube, a turbulent flow promoting member or a turbulent flow control member is disposed in a spiral shape so as to be along an inner circumferential surface of the cylindrical tube.

6. The scrubber for the exhaust gas purification apparatus for the marine diesel engine using the low-quality fuel such as fuel oil containing high-concentration sulfur components according to any one of claims 1 to 5, wherein the scrubber comprises a partition structure having an upper end of the cylindrical tube protruding from the upper tube plate and having, between protruding portions, at tips thereof, a groove whose bottom is positioned at a position higher than a tip height of the cylindrical tube and/or a conduction hole in a wall part or a groove at a lower end of the wall part, the partition structure having a height higher than a height of the protruding portions.

7. The scrubber for the exhaust gas purification apparatus for the marine diesel engine using the low-quality fuel such as fuel oil containing high-concentration sulfur components according to any one of claims 1 to 6, wherein the partition structure includes a weir provided in an outer cylinder concentric to the upper chamber and having the groove and/or the through hole between the outer cylinder and the upper chamber.

8. The scrubber for the exhaust gas purification apparatus for the marine diesel engine using the low-quality fuel such as fuel oil containing high-concentration sulfur components according to any one of claims 1 to 7, wherein, a multistage structure or a multilayered structure with a plurality of said scrubbers for the exhaust gas purification apparatus arranged in series in a vertical direction, the structure configured by interposing an adaptor between the lower guide pipe plate of one of the scrubber for the exhaust gas purification apparatus arranged above and the upper guide pipe plate of another of the scrubber for the exhaust gas purification apparatus arranged below, the adaptor having an inner diameter equal to an inner diameter of the upper or lower chamber and having adaptor flanges above and below.
